# EUROPÄISCHE PATENTANMELDUNG

(11) **EP 1 514 462 A1**
(43) Veröffentlichungstag der Anmeldung: **16.03.2005**
(21) Anmeldenummer: 04019457.3
(22) Anmeldetag: 17.08.2004
(51) Int. Cl.: A01B 3/46, A01B 17/00

(54) **Schwenkpflug**

(30) Priorität: 15.09.2003 DE 10342868
(71) Anmelder: Lemken GmbH & Co. KG, 46519 Alpen (DE)
(72) Erfinder: Meurs, Wilhelm, 46519 Alpen (DE)
(74) Vertreter: Schulte, Jörg

(57) **Zusammenfassung**

Ein Schwenkpflug (1) mit Nachlaufgerät (54) ist vorgesehen, das über einen Schwenkarm (12) mit dem Schwenkpflug verbunden ist und über das Drehwerk (35) während des Schwenkvorganges des Pflugrahmens von der einen Arbeitsstellung in die gegenüberliegende Arbeitsstellung gedreht wird.

## Beschreibung

Die Erfindung betrifft einen Schwenkpflug gemäß dem Oberbegriff des Patentanspruches 1.

Ein derartiger Schwenkpflug ist der deutschen Patentanmeldung DE-OS 41 37 834 zu entnehmen. Bei derartigen Schwenkpflügen werden Pflugkörper eingesetzt, die sowohl für die links wendende als auch für die rechts wendende Pflugarbeit geeignet sind. Für den Wechsel der Arbeitsstellung wird lediglich der Pflugrahmen um eine horizontale Achse verschwenkt. Insbesondere wenn in Kombination mit einem Nachlaufgerät oder einer Packerwalze gearbeitet werden soll, wurden diese Schwenkpflüge mit einem Packerarm bzw. zwei Packerarmen ausgerüstet, die dazu dienten, den Packer jeweils zu fangen, am Feldende auszuklinken und nach dem Kehrvorgang auf dem Vorgewende wieder zu fangen. Dies kompliziert insgesamt die Pflugarbeit und auch den Transport des Pflugnachläufers bzw. Packers, da für den Transport ein zusätzlicher Traktor eingesetzt werden musste.

Der Erfindung liegt die Aufgabe zugrunde, einen Schwenkpflug zu schaffen, der die zuvor erwähnten Nachteile nicht besitzt.

Die Aufgabe wird erfindungsgemäß mit den Merkmalen des kennzeichnenden Teils des Patentanspruches 1 gelöst.

Das Nachlaufgerät bzw. die Walze ist fest über den Schwenkarm mit dem Schwenkpflug verbunden und kann so in die jeweilige Arbeitsstellung geschwenkt werden, aber auch so zusammen mit dem Schwenkpflug transportiert werden. Ein zusätzlicher Traktor mit Fahrer ist nicht erforderlich. Das Nachlaufgerät kann auch aus einer Kombination verschiedener Geräte bestehen, z.B. aus einer Egge, einer Walze und einer Sämaschine.

Die Erfindung sieht weiter vor, dass die Verbindungsvorrichtung, der Schwenkarm oder der Rahmen des Nachlaufgerätes Mittel aufweisen, die eine Anpassbarkeit des Nachlaufgerätes an die unterschiedlichen Bodenverhältnisse und Bodenunebenheiten zulassend ausgebildet sind. Durch diese Anpassbarkeit wird eine gute und effektive Bodenbearbeitung erzielt und einseitige Überlastungen des Nachlaufgerätes und des Rahmens ausgeschlossen.

Erfindungsgemäß ist weiter vorgesehen, dass die Mittel aus mindestens einer überwiegend in Fahrtrichtung liegenden, horizontal angeordneten Pendelachse besteht, die vorzugsweise der Verbindungsvorrichtung zugeordnet ist. Durch das Vorsehen dieser Pendelachse wird eine sehr gute Bodenanpassbarkeit erzielt, wobei die Pendelachse vorzugsweise in der Mitte des Nachlaufgerätes angeordnet ist. Diese Art der Ausführung lässt eine zusätzliche senkrechte Spornachse zu, die noch eine verbesserte Laufrichtungsanpassung des entsprechenden Nachlaufgerätes sicherstellt. Die horizontal angeordnete Pendelachse wird vorzugsweise der Verbindungsvorrichtung zugeordnet, da dadurch der Schwenkarm als auch das Nachlaufgerät insgesamt einfach und kostengünstig ausgebildet sein können. Die Verbindungsvorrichtung beinhaltet zusätzliche Stellmittel, mit der unter anderem die Druckbelastung auf das Nachlaufgerät eingestellt werden kann.

Erfindungsgemäß ist weiter vorgesehen, dass das Drehwerk eine Drehkonsole aufweist, die um die Drehachse drehbar und den Schwenkarm über eine Befestigungsvorrichtung aufnehmend ausgebildet ist. Durch diese Ausführungsform können unterschiedlich schwere und lange Schwenkarme mittels der Befestigungsvorrichtung mit der Drehkonsole verbunden werden. Leichte Schwenkarme für leichte Walzen und massive Schwenkarme für schwere Packerwalzen oder Bestellkombinationen.

Erfindungsgemäß ist weiter vorgesehen, dass die Drehkonsole mehrere Befestigungsvorrichtungen für die Aufnahme mehrerer Schwenkarme aufweist, vorzugsweise zwei Befestigungsvorrichtungen. Um die Bodenanpassbarkeit zu verbessern, können anstatt einem Nachlaufgerät zwei Nachlaufgeräte vorgesehen werden, die in Arbeitsstellung hintereinander und seitlich versetzt zum Pflugrahmen angeordnet sind.

Erfindungsgemäß ist weiter vorgesehen, dass das Drehwerk über einen oder mehrere Hydraulikzylinder verfügt, die vorzugsweise simultan zur Schwenkeinrichtung des Pflugrahmens die Drehkonsole mit den daran mittelbar befestigten Nachlaufgeräten von der einen Arbeitsstellung in die gegenüberliegende Arbeitsstellung drehend ausgebildet sind. Über die Hydraulikzylinder kann das Nachlaufgerät einfach und direkt umgeschwenkt werden. Die Hydraulikzylinder werden dabei so gesteuert, dass während des Schwenkvorgangs des Pflugrahmens das Nachlaufgerät nicht mit dem Pflugrahmen kollidieren kann.

Erfindungsgemäß ist weiter vorgesehen, dass.das Drehwerk über ein Drehschwenkgetriebe mit einer kurvenbahnabhängigen Zwangsführung verfügt, das abhängig von der Schwenkbewegung des Pflugrahmens den jeweiligen Schwenkarm mit Walze in die dazugehörige Arbeitsstellung drehend ausgebildet ist. Durch diese von der Schwenkbewegung des Pflugrahmens abhängige Zwangsführung bzw. Zwangsdrehung des Drehwerkes werden die Schwenkarme mit den Nachlaufgeräten so verschwenkt, dass eine Kollision mit dem Pflugrahmen ausgeschlossen ist. Des weiteren brauchen keine zusätzlichen Hydraulikleitungen verlegt werden, da durch die Verschwenkung des Pflugrahmens das Drehwerk mechanisch betätigt wird und so über einen einzigen Hydraulikzylinder, nämlich den Hydraulikzylinder für die Verschwenkung des Pflugrahmens, alle Bauteile des Schwenkpfluges in die jeweilige Arbeitsstellung gebracht werden.

Die Erfindung sieht weiter vor, dass der Schwenkpflug als so genannter Onland-Pflug ausgebildet ist, bei dem der direkte Abstand zwischen dem 1. Pflugkörper und der Mittelinie des Traktors größer als 100 cm ist. Durch diesen großen Versatz zwischen dem ersten Körper und der Mittellinie des Traktors ist es möglich mit dem Traktor auf dem Land zu pflügen. Dadurch können auch schmale Pflugkörper, z.B. Schälpflugkörper eingesetzt werden, die keine breite Furche für die Aufnahme der furchenseitigen Traktorräder hinterlassen müssen und somit sehr leichtzügig sind.

Weitere Einzelheiten und Vorteile des Erfindungsgegenstandes ergeben sich aus der nachfolgenden Beschreibung und den zugehörigen Zeichnungen, in denen die notwendigen Einzelheiten dargestellt sind. Es zeigen:
Figur 1 einen Schwenkpflug mit Nachlaufgeräte in Arbeitsstellung,
Figur 2 einen Schwenkpflug mit Nachlaufgeräte in Transportstellung,
Figur 3 eine Vorderansicht des Schwenkpfluges in Transportstellung und
Figur 4 eine Detailansicht des Drehschwenkgetriebes.

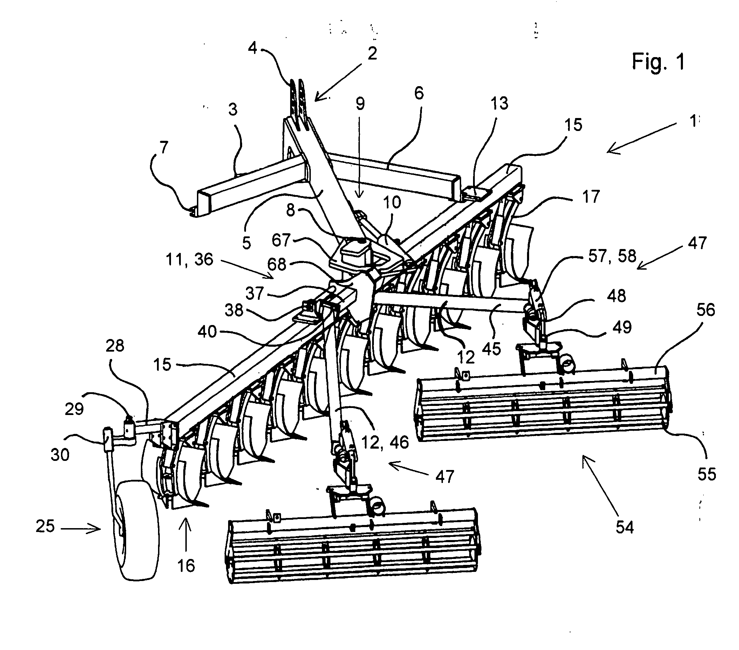

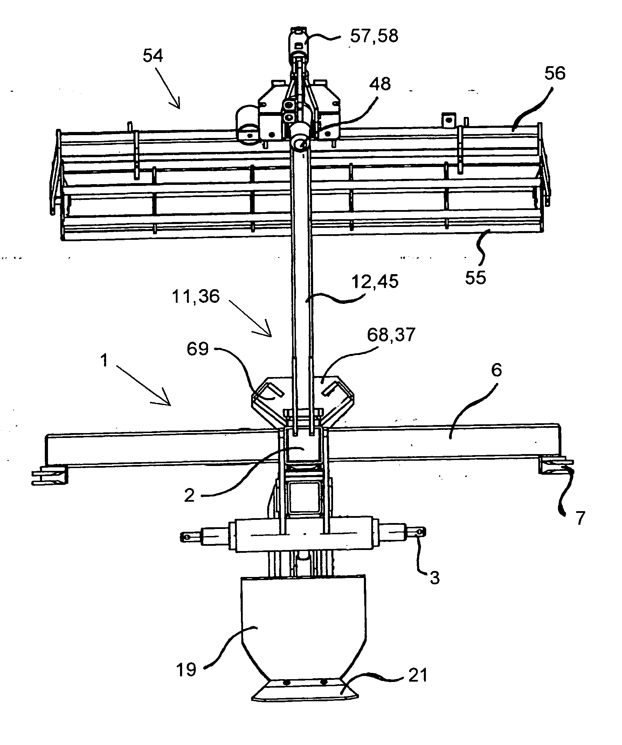

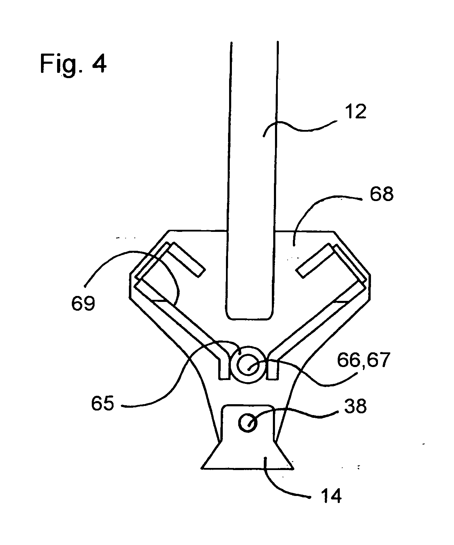

Figur 1 zeigt einen Schwenkpflug (1) mit zwei Nachlaufgeräten (54) in Arbeitsstellung. Der Schwenkpflug (1) weist einen Pflugturm (2) auf, der Anlenkpunkte (3) für die Unterlenker eines Traktors aufweist. Der Pflugturm (2) weist hier auch Anlenkpunkte (4) für einen Traktoroberlenker auf, die es ermöglichen, den Schwenkpflug nicht nur am Traktor aufgesattelt, sondern auch am Traktor angebaut einzusetzen. Der Pflugturm (2) ist mit einem Verbindungsrahmen (5) verbunden, der endseitig über eine Schwenkeinrichtung (9) mit Schwenkgelenk (8) mit dem Pflugrahmen (15) verbunden ist. Der Pflugrahmen (15) wird über den Hydraulikzylinder (10) in die jeweilige Arbeitsstellung geschwenkt, entweder in die links wendende Arbeitsstellung oder in die die rechts wendende Arbeitsstellung. Unterhalb des Pflugrahmens sind Pflugkörper (16) vorgesehen, die über Körperhalme (17) mit dem Pflugrahmen verbunden sind. Der Verbindungsrahmen (5) weist links und rechts Stützarme (6) auf, die endseitig jeweils eine Arretierung (7) aufweisen. Vorne am Pflugrahmen (15) befindet sich eine Riegelplatte (13), die in der jeweiligen Pflugstellung in die gabelförmigen Arretierungen eingreift. Der weit nach vorne ausragende Pflugrahmen wird so während der Pflugarbeit unterstützt und kann nicht überlastet werden. Hinter der Schwenkeinrichtung (9) befindet sich oberhalb des Pflugrahmens (15) das Drehwerk (11) mit seiner Drehkonsole (37). Das Drehwerk (11) weist eine Drehachse (38) auf, um die die Drehkonsole geschwenkt bzw. gedreht wird. Die Drehkonsole weist flanschartige Befestigungsvorrichtungen (40) für die Aufnahme von Schwenkarmen (12) auf. Der erste Schwenkarm (45) ist vorne und der zweite Schwenkarm (46) ist hinten mit der Schwenkkonsole verbunden. Die Schwenkarme (12) weisen endseitig Verbindungsvorrichtungen (47) auf, die über eine horizontale Pendelachse (48) und eine vertikale Schwenkachse (49) verfügen. Die Verbindungsvorrichtung (47) trägt das Nachlaufgerät (54), das hier aus dem Rahmen (56) mit Walze (55) besteht. Die Arbeitstiefe des jeweiligen Nachlaufgerätes bzw. die Druckbelastung auf das Nachlaufgerät (54) erfolgt über die Tiefenstelleinrichtung (57), die hier in diesem Fall aus einem Hydraulikzylinder (58) besteht. Während der Arbeit sind die beiden Hydraulikzylinder (10) der Nachlaufgeräte (54) hydraulisch miteinander verbunden, so dass beide Nachlaufgeräte mit dem gleichen Druck belastet werden. Das Drehwerk (11) wird über ein Drehschwenkgetriebe (36) angetrieben, wobei das Drehschwenkgetriebe eine Basisplatte (68) mit Kurvenbahn (69) aufweist, die mit der Drehkonsole (37) verbunden ist und einer Achse (66) mit Kugel (65), die endseitig mit der Rahmenverlängerung (67) des Verbindungsrahmens (5) verbunden ist. Einzelheiten dazu sind den Figuren 3 und 4 zu entnehmen.

Endseitig am Pflugrahmen (15) ist ein Stützrad (25) angeordnet. Das Stützrad ist hier als Spornrad mit senkrechter Schwenkachse (29) dargestellt. Das Stützrad führt den Schwenkpflug hinten in seiner Arbeitstiefe und kann über die Einstellvorrichtung (30) in seiner Tiefenstellung verändert werden.

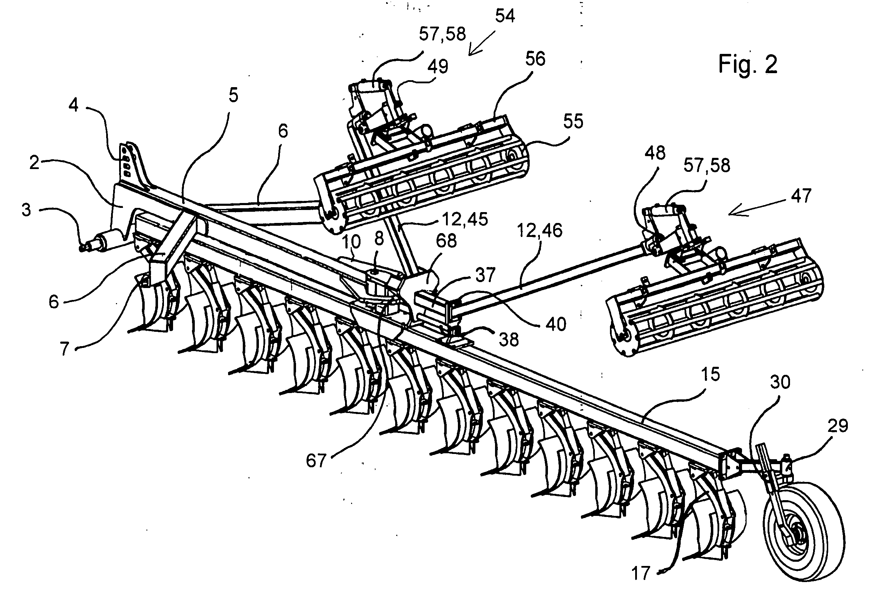

Figur 2 zeigt den Schwenkpflug mit Nachlaufgerät (54) in Transportstellung. Der Hydraulikzylinder (10) ist dabei so weit eingefahren, dass der Pflugrahmen (15) in Draufsicht parallel zu dem Verbindungsrahmen (5) angeordnet ist. Das Drehwerk (11) mit der Drehkonsole (37) befindet sich in der halbgedrehten Stellung. Der Antrieb des Drehwerkes erfolgt über das Drehschwenkgetriebe (36), das in der Beschreibung zu der Figur 3 und der Figur 4 näher beschrieben wird. Dadurch, dass die Schwenkeinrichtung (9) und das Drehwerk (11) über das Drehschwenkgetriebe (36) kurvenbahnabhängig zwangsgeführt sind, können die Nachlaufgeräte (54) niemals mit dem Pflugrahmen (15) kollidieren. Die Figur 2 verdeutlicht auch den Aufbau der Verbindungsvorrichtung (47) mit der horizontalen Pendelachse (48) und der vertikalen Schwenkachse (49). Die horizontale Pendelachse sorgt zum einen für eine gute Bodenanpassung des Nachlaufgerätes (54), zum anderen ermöglicht sie, dass während des Drehvorganges der Nachlaufgeräte (54), diese immer richtig stehen, und zwar sowohl für die links und rechts wendende Pflugarbeit als auch für die Transportfahrt. Dadurch dass zwei Schwenkarme (12) vorgesehen sind, kann die zulässige Transportbreite von 3 m eingehalten werden, obwohl der hier dargestellte Schwenkpflug breiter als 4 m arbeitet. Jedes der beiden Nachlaufgeräte (54) ist in diesem Fall breiter als 2 m aber deutlich schmaler als 3 m. Die hier dargestellten Nachlaufgeräte (54) bestehen aus einem Rahmen (15) mit einer Walze (55). Den Figuren 3 und 4 sind Einzelheiten des Drehschwenkgetriebes zu entnehmen.

Figur 3 zeigt eine Vorderansicht des Schwenkpfluges in Transportstellung. Die Drehkonsole (37) und damit der Schwenkarm (12) befinden sich in der Mittelstellung. Das Nachlaufgerät (54) befindet sich nun oberhalb des Schwenkpfluges (1). Es wird über das Drehschwenkgetriebe in dieser Stellung gehalten. Die Figur 3 verdeutlicht auch den einfachen Aufbau des Pflugkörpers (16) mit seinem schmalen Streichblech (19) und dem Schar (21). Das Drehwerk (11) mit der Drehkonsole (37) trägt die Basisplatte (68) mit der Kurvenbahn (69).

Figur 4 zeigt eine Detailansicht des Drehschwenkgetriebes mit der Basisplatte (68), der Kurvenbahn (69) und der Achse (66) mit Kugel (65). Die Achse (66) mit Kugel (65) ist Teil der Rahmenverlängerung (67) des Verbindungsrahmens (5). Während des Schwenkvorganges wird die Kugel (65), die im Abstand zur Drehachse (38) angeordnet ist waagerecht hin- und herbewegt. Die Drehachse (38) ist über zwei Lagerplatten (14) direkt mit dem Pflugrahmen verbunden. Die Basisplatte (68) mit der Kurvenbahn (69) wird so zusammen mit dem Schwenkarm (12) in die links wendende oder rechts wendende Arbeitsstellung geschwenkt bzw. gedreht. Durch dieses Drehschwenkgetriebe erübrigen sich zusätzliche Hydraulikzylinder oder Stellteile. Mit Hilfe eines Hydraulikzylinders, nämlich dem Hydraulikzylinder (10) der Schwenkeinrichtung (9), wird über das Drehschwenkgetriebe (36) die Drehkonsole (37) des Drehwerkes (11) gedreht und damit der Schwenkarm (12) mit Nachlaufgerät (54).

Alle genannten Merkmale, auch die den Zeichnungen allein zu entnehmen sind, werden allein und in Kombination als erfindungswesentlich angesehen.

## Patentansprüche

1. Schwenkpflug mit einem Pflugturm (2), der über einen Verbindungsrahmen (5) und eine Schwenkeinrichtung (9) mit Schwenkgelenk (8) mit dem Pflugrahmen (15) verbunden ist, wobei der Pflugrahmen mindestens vier Pflugkörper (16) aufweist, die jeweils für die links und rechts wendende Pflugarbeit geeignet und die über Körperhalme (17) mit dem Pflugrahmen verbunden sind,
**dadurch gekennzeichnet,**
**dass** dem Schwenkpflug ein Drehwerk (11) zugeordnet ist, das einen für die links und rechts wendende Pflugarbeit vorgesehenen Schwenkarm (12) aufweist, der um eine annähernd waagerecht liegende Drehachse (38) von der einen Arbeitsposition in die andere Arbeitsposition schwenkbar ist und der endseitig eine Verbindungsvorrichtung (47) aufweist, die über einen Rahmen (56) mit einem Nachlaufgerät, z.B. einer Walze (55) verbunden ist.

2. Schwenkpflug nach Anspruch 1,
**dadurch gekennzeichnet,**
**dass** die Verbindungsvorrichtung (47), der Schwenkarm (12) oder der Rahmen (56) des Nachlaufgerätes (54) Mittel aufweisen, die eine Anpassbarkeit des Nachlaufgerätes an die unterschiedlichen Bodenverhältnisse und Bodenunebenheiten zulassend ausgebildet sind.

3. Schwenkpflug nach Anspruch 1 und 2,
**dadurch gekennzeichnet,**
**dass** die Mittel aus mindestens einer überwiegend in Fahrtrichtung liegenden, horizontal angeordneten Pendelachse (48) besteht, die vorzugsweise der Verbindungsvorrichtung (47) zugeordnet ist.

4. Schwenkpflug nach Anspruch 1 bis 3,
**dadurch gekennzeichnet,**
**dass** das Drehwerk (11) eine Drehkonsole (37) aufweist, die um die Drehachse (38) drehbar und den Schwenkarm (12) über eine Befestigungsvorrichtung (40) aufnehmend ausgebildet ist.

5. Schwenkpflug nach Anspruch 1 bis 4,
**dadurch gekennzeichnet,**
**dass** die Drehkonsole (37) mehrere Befestigungsvorrichtungen (40) für die Aufnahme mehrerer Schwenkarme (12) aufweist, vorzugsweise zwei Befestigungsvorrichtungen (40).

6. Schwenkpflug nach Anspruch 1 bis 5,
**dadurch gekennzeichnet,**
**dass** das Drehwerk (11) über einen oder mehrere Hydraulikzylinder verfügt, die vorzugsweise simultan zur Schwenkeinrichtung (9) des Pflugrahmens (15) die Drehkonsole (37) mit dem daran mittelbar befestigten Nachlaufgerät (54) von der einen Arbeitsstellung in die gegenüberliegende Arbeitsstellung drehend ausgebildet sind.

7. Schwenkpflug nach Anspruch 1 bis 6,
**dadurch gekennzeichnet,**
**dass** das Drehwerk (11) über ein Drehschwenkgetriebe (36) mit einer kurvenbahnabhängigen Zwangsführung verfügt, das abhängig von der Schwenkbewegung des Pflugrahmens (15) den jeweiligen Schwenkarm (12) mit Nachlaufgerät (54) in die entsprechende Arbeitsstellung drehend ausgebildet ist.

8. Schwenkpflug nach Anspruch 1 bis 7,
**dadurch gekennzeichnet,**
**dass** der Schwenkpflug als so genannter Onland-Pflug ausgebildet ist, bei dem der direkte Abstand zwischen dem 1. Pflugkörper und der Mittelinie des Traktors größer als 100 cm ist.
